# EUROPEAN PATENT SPECIFICATION

(11) **EP 3 012 446 B1**
(45) Date of publication and mention of the grant of the patent: **03.10.2018**
(21) Application number: 15190479.4
(22) Date of filing: 20.10.2015
(51) Int. Cl.: F02M 35/10, B29D 23/00, B29C 33/76

(54) **STRADDLED VEHICLE AND METHOD FOR MANUFACTURING INTAKE MEMBER**
GRÄTSCHSITZFAHRZEUG UND VERFAHREN ZUR HERSTELLUNG EINES ANSAUGELEMENTS
VÉHICULE À CALIFOURCHON ET PROCÉDÉ DE FABRICATION D'UN ÉLÉMENT D'ADMISSION

(30) Priority: 21.10.2014 JP 2014214816
(43) Date of publication of application: 27.04.2016
(73) Proprietor: Yamaha Hatsudoki Kabushiki Kaisha, Iwata-shi, Shizuoka 438-8501 (JP)
(72) Inventor: TAKAMA, Hiroaki, Iwata-shi, Shizuoka 438-8501 (JP); MIYASHITA, Tomoyuki, Iwata-shi, Shizuoka 438-8501 (JP); ISHIKAWA, Satoshi, Iwata-shi, Shizuoka 438-8501 (JP); SUGITANI, Tsuyoshi, Iwata-shi, Shizuoka 438-8501 (JP); ISHIZAWA, Kazuhiro, Iwata-shi, Shizuoka 438-8501 (JP)
(74) Representative: Grünecker Patent- und Rechtsanwälte PartG mbB

(56) References cited:
- EP-A1- 0 791 743
- EP-A1- 1 424 490
- WO-A1-2007/003442
- CN-U- 203 650 881
- DE-A1- 2 345 040
- DE-A1- 3 311 315
- JP-A- S5 996 426
- JP-A- H04 341 834
- JP-A- S62 249 721
- JP-A- 2003 120 245

## Description

The present invention relates to a straddled vehicle and a method for manufacturing an intake member included in the straddled vehicle.

JP 2011201214 A discloses an intake manifold that is made of resin and guides intake air to a plurality of cylinders of an engine. An inner wall of the intake manifold includes an arcuate portion formed by an arc-shaped first core and a linear portion formed by a linear second core. The intake manifold is formed in a state where an end portion of the first core and an end portion of the second core are butted against each other. In FIG. 6 (a) of JP 2011201214 A, the end portions of the first core and the second core are depicted so that an outer diameter of the end portion of the first core and an outer diameter of the end portion of the second core are equal to each other.

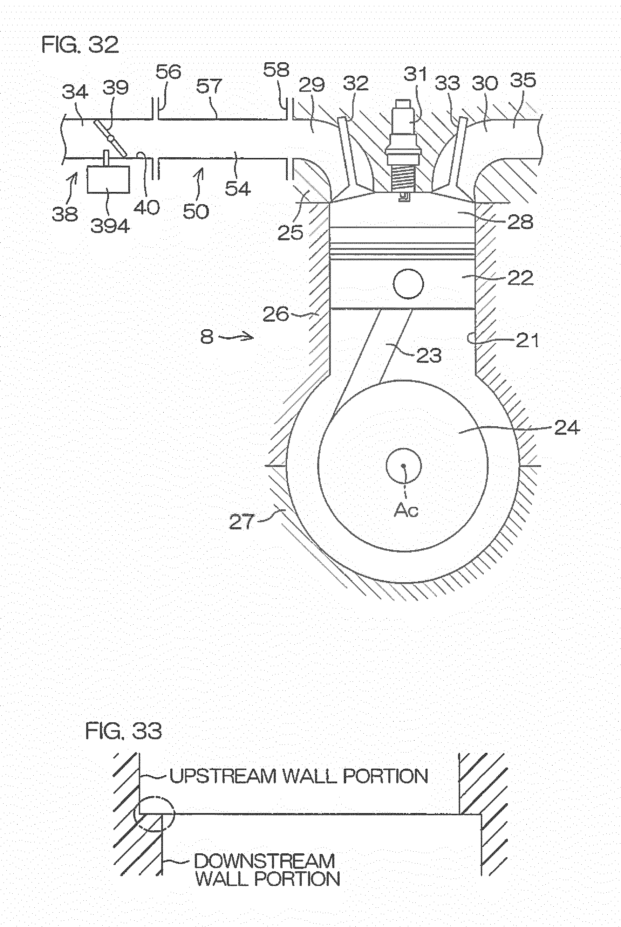

However, it is difficult to dispose the end portions of the first core and the second core exactly coaxially. When the intake manifold is formed in a state where the end portion of the first core is eccentric with respect to the end portion of the second core, a step as shown in FIG. 33 is provided on the inner wall of the intake manifold. In this case, a portion of a downstream wall portion of the step (a portion surrounded by a circle of alternate long and short dashed line) is disposed at a more inward position than an upstream wall portion of the step. That is, a portion of the downstream wall portion protrudes toward a center line of the intake manifold.

In a case where such a step is provided on the inner wall of the intake member, it is likely that a fuel contained in an air-fuel mixture that flows upwardly and downwardly alternately inside the intake member due to pulsation of the engine is gradually accumulated at the step of the intake member (especially, an upper surface of a protruding portion of the downstream wall portion) and then droplets of the fuel retained at the step are sucked into the engine at unexpected timing. In this case, the fuel is supplied to the engine at an amount larger than intended. To avoid such a problem, removing the step of the intake member by machining such as shot peening and so on can be considered. However, when the machining is added, the production cost and the production time of the intake member increase. Furthermore, prior art document JP H04 341834 A describes a system which enables to provide a curved pipe having a multi-curved lines or multi-straight lines and made of a synthetic resin.

It is an object of the present invention to reduce an amount of fuel accumulated in an intake member, while suppressing or preventing the time and the effort required to manufacture the intake member from increasing. This object is achieved by the straddled vehicle according to claim 1. Preferred embodiments are laid down in the dependent claims.

In order to overcome the previously unrecognized and unsolved challenges described above, a preferred embodiment provides a straddled vehicle including an engine, an intake flow rate control device that adjust a flow rate of intake air to be supplied to the engine; and an intake member that is made of resin and includes an inner wall defining a flow passage that guides the intake air from the intake flow rate control device to the engine. An annular step is formed on the inner wall of the intake member. The annular step includes an upstream wall portion that extends in an axial direction of the intake member, a downstream wall portion that extends in the axial direction at a position downstream of the upstream wall portion with respect to a flow direction of the intake air, and a connecting wall portion that connects a first connecting end of the upstream wall portion and a second connecting end of the downstream wall portion with each other. The second connecting end of the downstream wall portion is disposed at a more outward position than the first connecting end of the upstream wall portion in a radial direction of the intake member. The connecting wall portion extends outwardly in the radial direction of the intake member from the first connecting end toward the second connecting end.

With this arrangement, the annular step is formed on the inner wall of the intake member. The annular step includes the upstream wall portion, the downstream wall portion, and the connecting wall portion. The connecting wall portion connects the first connecting end of the upstream wall portion and the second connecting end of the downstream wall portion with each other. The second connecting end of the downstream wall portion is disposed at a more outward position than the first connecting end of the upstream wall portion in the radial direction of the intake member at any position in the circumferential direction of the intake member. The connecting wall portion extends outward in the radial direction of the intake member from the first connecting end toward the second connecting end. Thus, the connecting wall portion is directed downstream with respect to a flow direction of intake air. Therefore, even if the air-fuel mixture flows in reverse from the engine to the intake member, the fuel contained in the air-fuel mixture is unlikely to be accumulated at the connecting wall portion of the annular step. Therefore, the annular step does not need to be removed by machining, because the fuel is unlikely to be accumulated at the annular step.

Consequently, the amount of the fuel accumulated in the intake member is reduced, while the time and the effort required to manufacture the intake member is suppressed or prevented from increasing.

In the preferred embodiment, the intake member includes an outer wall provided with an inlet that guides the intake air which has passed through the intake flow rate control device to the flow passage and an outlet that discharges the intake air which has flowed into the inlet. In this case, an opening area of the outlet of the intake member is smaller than an opening area of the inlet of the intake member.

With this arrangement, the opening area of the outlet of the intake member is smaller than the opening area of the inlet of the intake member, so that the flow speed of the intake air at the outlet of the intake member is greater than that at the inlet of the intake member. Thus, turbulent flow is unlikely to occur at the outlet of the intake member. Therefore, the flow of the intake air at the outlet of the intake member is rectified, so that the flow of the intake air flowing from the intake member to the engine is rectified. Additionally, the fuel in the vicinity of the outlet of the intake member is discharged immediately toward the downstream side, because the flow speed of the intake air at the outlet of the intake member is high.

In the preferred embodiment, in a case where the intake member includes the outer wall provided with the inlet and the outlet, an inner diameter of the intake member decreases as a distance from the inlet toward the upstream wall portion of the annular step increases, and decreases as a distance from the outlet toward the downstream wall portion of the annular step increases. With this arrangement, a draft angle is provided with the inner wall of the intake member, so that the intake member is manufactured efficiently.

In the preferred embodiment, in a case where the inner diameter of the intake member decrease as the distance from the inlet toward the upstream wall portion of the annular step increases, a distance from the first connecting end to the second connecting end in the radial direction of the intake member may be smaller than a difference of an inner diameter of the intake member at the inlet and an inner diameter of the intake member at the first connecting end. With this arrangement, the width of the connecting wall portion is small, so that the intake air flowing inside the flow passage toward the outlet of the intake member is unlikely to be disturbed by the annular step. Thus, turbulence of air current flowing toward the outlet of the intake member is suppressed.

In the preferred embodiment, a center line of the intake member includes a first arcuate portion and a second arcuate portion. A first curvature center of the first arcuate portion and a second curvature center of the second arcuate portion are at different positions.

In the preferred embodiment, a center line of the intake member may include an arcuate portion and a linear portion.

In the preferred embodiment, the connecting wall portion of the annular step includes an inclined portion obliquely inclined with respect to a center line of the intake member so as to move away from the center line of the intake member from the upstream wall portion toward the downstream wall portion.

Other preferred embodiment which is not part of the invention provides a method for manufacturing an intake member that is made of resin and includes an inner wall defining a flow passage that guides intake air to an engine from the intake flow rate control device which adjusts a flow rate of the intake air to be supplied to the engine.

The method for manufacturing the intake member includes a step of defining a resin-injected space at an inside of a mold around a first core and a second core including a second end portion larger than a first end portion of the first core in a state where the first end portion of the first core and the second end portion of the second core are butted against each other, a step of injecting resin into the resin-injected space and shaping the intake member, and a step of detaching the first core and the second core from the intake member by moving the first core and the second core with respect to the intake member.

An annular step may be formed on the inner wall of the intake member. The annular step may include an upstream wall portion that extends in an axial direction of the intake member, a downstream wall portion that extends in the axial direction at a position downstream of the upstream wall portion with respect to a flow direction of the intake air, and a connecting wall portion that connects a first connecting end of the upstream wall portion and a second connecting end of the downstream wall portion with each other. The second connecting end of the downstream wall portion may be disposed at a more outward position than the first connecting end of the upstream wall portion in a radial direction of the intake member at any position in a circumferential direction of the intake member. The connecting wall portion may extend outwardly in the radial direction of the intake member from the first connecting end toward the second connecting end.

With this method, the inner wall of the intake member is formed by the first core and the second core in a state where the end portions of the first core and the second core are butted against each other. Because the first end portion of the first core is smaller than the second end portion of the second core, the annular step is formed on the inner wall of the intake member. However, Because the first end portion of the first core which shapes the upstream wall portion of the annular step is smaller than the second end portion of the second core which shapes the downstream wall portion of the annular step, the second connecting end of the downstream wall portion is disposed at a more outward position than the first connecting end of the upstream wall portion in the radial direction of the intake member. If the first end portion is eccentric with respect to the second end portion, the connecting wall portion absorbs the shift length of the first end portion and the second end portion. Thus, the connecting wall portion is unlikely to be directed upstream with respect to the flow direction of the intake air. Therefore, even if the air-fuel mixture flows in reverse from the engine to the intake member, the fuel contained in the air-fuel mixture is unlikely to be accumulated at the connecting wall portion of the annular step. Therefore, the annular step does not need to be removed by machining, because the fuel is unlikely to be accumulated at the annular step.

Consequently, the amount of the fuel accumulated in the intake member is reduced, while the time and the effort to required manufacture the intake member is suppressed or prevented from increasing.

In the other preferred embodiment which is not part of the invention, each of the first core and the second core may have an arc-shape.

In the other preferred embodiment which is not part of the invention, one of the first core and the second core may have an arc-shape and the other of the first core and the second core may have a linear shape.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. 1 is a schematic view showing a left side of the straddled vehicle according to a first preferred embodiment.
FIG. 2 is a schematic view showing a left side of the straddled vehicle from which the exterior cover and so on are detached.
FIG. 3 is a schematic view showing the engine and arrangements related thereto.
FIG. 4 is a view showing an external appearance of the intake member.
FIG. 5 is a view of the intake member, viewed in the direction of the arrow V shown in FIG. 4.
FIG. 6 is a view of the intake member, viewed from the side of the intake flow rate control device.
FIG. 7 is a view of the intake member, viewed from the side of the engine.
FIG. 8 is a view showing a cross-section of the intake member taken along the VIII-VIII line shown in FIG. 6.
FIG. 9 is a view showing a cross-section of the intake member taken along the IX-IX line shown in FIG. 7.
FIG. 10 is a view showing a cross-section of the intake member taken along the X-X line shown in FIG. 5.
FIG. 11 is a schematic view showing a cross-section of the annular step of the intake member.
FIG. 12 is a schematic view showing a cross-section of the mold device to form the intake member.
FIG. 13 is a view showing a cross-section of the mold device taken along the XIII-XIII line shown in FIG. 12.
FIG. 14 is a view showing a cross-section of the mold device when the intake member is being formed.
FIG. 15 is a view showing a cross-section of the mold device when the core is being detached from the intake member.
FIG. 16 is a view showing an external appearance of the intake member according to a second preferred embodiment.
FIG. 17 is a view of the intake member, viewed in the direction of the arrow XVII shown in FIG. 16.
FIG. 18 is a view of the intake member, viewed from the side of the intake flow rate control device.
FIG. 19 is a view of the intake member, viewed from the side of the engine.
FIG. 20 is a view showing a cross-section of the intake member taken along the XX-XX line shown in FIG. 17.
FIG. 21 is a schematic view showing a cross-section of the annular step of the intake member.
FIG. 22 is a schematic view showing a cross-section of the mold device to form the intake member.
FIG. 23 is a view showing a cross-section of the mold device taken along the XXIII- XXIII line shown in FIG. 22.
FIG. 24 is a view showing a cross-section of the mold device when the intake member is being formed.
FIG. 25 is a view showing a cross-section of the mold device when the core is being detached from the intake member.
FIG. 26 is a view showing the center line of the intake member according to another preferred embodiment, and shows positional relationships of the first arcuate portion, the first curvature center, the second arcuate portion, and the second curvature center when a flow passage of the intake member is twisted.
FIG. 27 is a view of the first curvature center and the second curvature center, viewed in the direction of the arrow XXVII shown in FIG. 26.
FIG. 28 is a view showing a cross-section of the intake member according to yet another preferred embodiment.
FIG. 29 is a schematic view showing a cross-section of the annular step according to yet another preferred embodiment.
FIG. 30 is a schematic view showing a cross-section of the annular step according to yet another preferred embodiment.
FIG. 31 is a schematic view showing a cross-section of the annular step according to yet another preferred embodiment.
FIG. 32 is a schematic view showing the fuel supply device according to yet another preferred embodiment.
FIG. 33 is a schematic view showing a cross-section of the step which is formed when the intake member is formed in a state where the end portion of the first core is eccentric with respect to the end portion of the second core.

### DETAILED DESCRIPTION OF THE PREFERRED EMBODIMENTS

Front-rear, up-down, and left-right directions in the following description are defined on the basis of a viewpoint of a forward-facing rider who sits on a straddled vehicle 1 in a reference posture in which the straddled vehicle 1 travels straight ahead on a horizontal plane (in which a steering handle 7 is in a straight-traveling position). The left-right direction corresponds to a vehicle width direction. A vehicle center corresponds to a vertical plane that passes through a center line of a head pipe 3 and that is perpendicular to a rotational center of a rear wheel Wr. The straddled vehicle 1 in the reference posture will be hereinafter described unless specific notice is given.

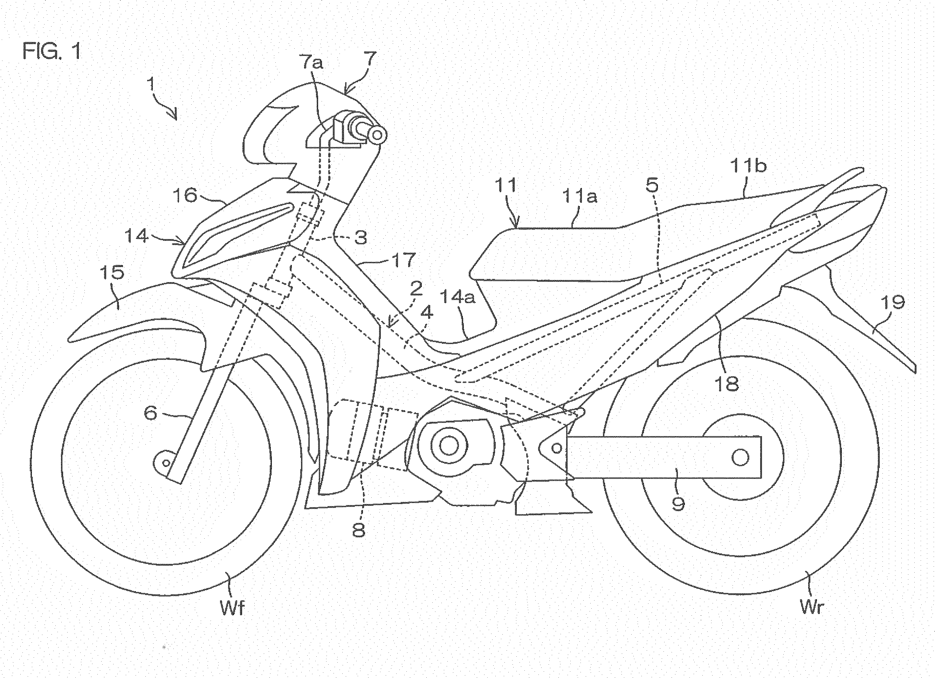

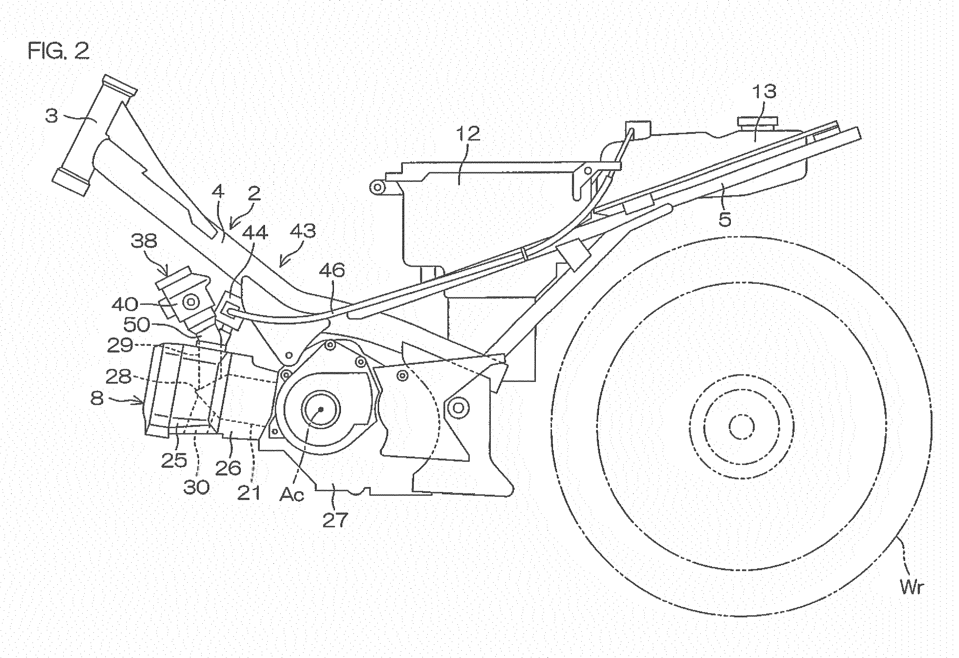

FIG. 1 is a schematic view showing a left side of the straddled vehicle according to a first preferred embodiment. FIG. 2 is a schematic view showing a left side of the straddled vehicle from which the exterior cover and so on are detached.

As shown in FIG. 1, the straddled vehicle 1 includes a frame 2 covered with the exterior cover 14. The frame 2 includes the head pipe 3 that extends rearward and upwardly, a main frame 4 that extends rearward and downwardly from the head pipe 3, and a left-and-right pair of seat frames 5 that extend rearward and upwardly from the main frame 4. The pair of the seat frames 5 are disposed on the right side and on the left side of the vehicle center, respectively.

As shown in FIG. 2, the straddled vehicle 1 includes a front fork 6 that is supported by the frame 2 and is configured to turn rightwardly and leftwardly around the center line of the head pipe 3, a front wheel Wf that is rotatably supported by the front fork 6, and a steering handle 7 that is configured to turn rightwardly and leftwardly around the center line of the head pipe 3 together with the front fork 6 and the front wheel Wf. The steering handle 7 includes a handle bar 7a disposed higher than the head pipe 3. The handle bar 7a is disposed at a position that is higher than a seat 11 and more forward than the seat 11. When the steering handle 7 is operated by a driver, the front wheel Wf turns rightwardly and leftwardly together with the steering handle 7. As a result, the straddled vehicle 1 is steered.

As shown in FIG. 1, the straddled vehicle 1 includes a swing arm 9 supported by the frame 2 and configured to swing in the up-down direction, and the rear wheel Wr rotatably supported by a rear portion of the swing arm 9. The straddled vehicle 1 further includes an engine 8 that generates power to make the straddled vehicle 1 travel, a driving mechanism (not shown) that transmits the power of the engine 8 to the rear wheel Wr. The engine 8 is disposed below the main frame 4. The engine 8 is fixed to the frame 2. The swing arm 9 and the rear wheel Wr are swingable in the up-down direction around a front portion of the swing arm 9. The rear wheel Wr is disposed at a position that is behind the engine 8 and under the seat frames 5 in a side view.

As shown in FIG. 1, the straddled vehicle 1 includes a saddle type seat 11 on which a driver sits. The seat 11 may be for one person or for two persons. FIG. 1 shows an example in which the seat 11 is provided with a driver's seating surface 11a on which the driver sits and a fellow passenger's seating surface 11b on which the fellow passenger sits. The seat 11 is disposed behind the head pipe 3. The seat 11 is disposed above the pair of the seat frames 5. The seat 11 is disposed higher than the engine 8. The seat 11 may be supported by the pair of the seat frames 5 via other members such as a storage box 12 and so on, or may be directly supported by the pair of the seat frames 5.

As shown in FIG. 2, the straddled vehicle 1 includes the storage box 12 provided with an opening portion in an upper portion of the storage box 12, and a fuel tank 13 storing fuel to be supplied to the engine 8. The storage box 12 is disposed in front of the fuel tank 13. The pair of the seat frames 5 is disposed on the right and left side of the storage box 12. The storage box 12 and the fuel tank 13 are supported by the frame 2. The storage box 12 and the fuel tank 13 are disposed under the seat 11. A front end portion of the seat 11 is connected to a front end portion of the storage box 12 so as to turn around a horizontal opening and closing axis extending the vehicle width direction. The seat 11 is tumable up and down with respect to the storage box 12. The opening portion of the storage box 12 is opened and closed by the seat 11.

As shown in FIG. 1, the straddled vehicle 1 includes the exterior cover 14 that covers the flam 2 and so on. The exterior cover 14 defines a recessed portion 14a between the seat 11 and the steering handle 7, and the recessed portion 14a is more recessed than the seat 11. A bottom portion of the recessed portion 14a is disposed above the main frame 4. The exterior cover 14 includes a front fender 15 disposed above and behind the front wheel Wf, a front cover 16 covering the head pipe 3 from the front side thereof, a leg shield 17 disposed behind the head pipe 3 and the front cover 16. A right end portion and a left end portion of the leg shield 17 are disposed in front of left-and-right legs of a driver. The exterior cover 14 further includes a rear cover 18 covering the pair of the seat frames 5 from the lateral sides thereof, a rear fender 19 disposed above and behind the rear wheel Wr.

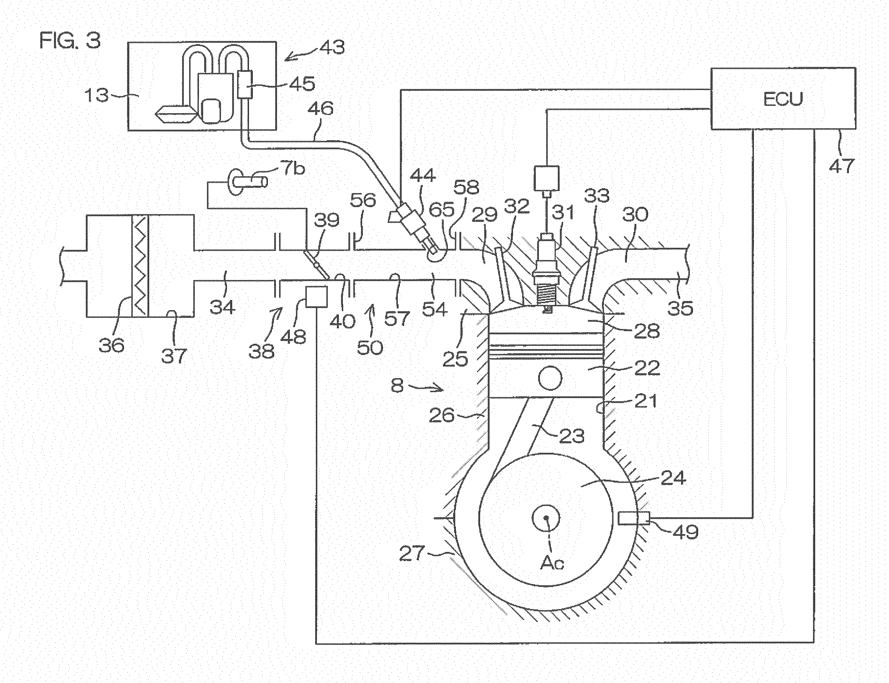

FIG. 3 is a schematic view showing the engine 8 and arrangements related thereto. It is noted that an arrangement, a posture, a size and so on of each members shown in FIG. 3 are different from the factual arrangement and so on.

the engine 8 is a single-cylinder 4-stroke air - cooled engine, for example. As shown in FIG. 3, the engine 8 includes a crank shaft 24 that is rotatable around a crank axis Ac, a piston 22 that reciprocates inside a cylinder 21 in accordance with the rotation of the crank shaft 24, and a connecting rod 23 that connects the piston 22 to the crank shaft 24. The engine 8 further includes a cylinder body 26 that defines the cylinder 21 accommodating the piston 22, a cylinder head 25 that defines a combustion chamber 28, an intake port 29, and an exhaust port 30, and a crank case 27 that houses the crank shaft 24 in cooperation with the cylinder body 26.

As shown in FIG. 2, the cylinder head 25 is disposed in front of the cylinder body 26. The intake port 29 extends upwardly from the combustion chamber 28 and the exhaust port 30 the exhaust port 30 downwardly from the combustion chamber 28. The cylinder 21 extends in the front-rear direction in a plain view. The cylinder 21 is inclined in the up-down direction in such a manner that the cylinder 21 is located upwardly as a front end of the cylinder 21 is approached. The crank case 27 is disposed behind the cylinder body 26. The crank axis Ac extends in the left-right direction.

As shown in FIG. 3, the engine 8 includes a spark plug 31 that ignites an air-fuel mixture of air and fuel inside the combustion chamber 28, an intake valve 32 that opens and closes the intake port 29, and an exhaust valve 33 that opens and closes the exhaust port 30. The combustion chamber 28 is connected to an intake passage 34 that guides intake air to the combustion chamber 28, and connected to an exhaust passage 35 that guides exhaust gas generated in the combustion chamber 28 in accordance with combustion of the air-fuel mixture. The intake port 29 is a portion of the intake passage 34, and the exhaust port 30 is a portion of the exhaust passage 35.

As shown in FIG. 3, the straddled vehicle 1 includes an air filter 36 that removes particles from the intake air flowing inside the intake passage 34 toward the combustion chamber 28 and an intake flow rate control device 38 that changes flow rate of the intake air to be supplied to the combustion chamber 28. The air filter 36 is housed in an air cleaner box 37. The intake flow rate control device 38 includes a throttle valve 39 disposed inside the intake passage 34 and a throttle body 40 that houses the throttle valve 39. The air cleaner box 37 and the throttle body 40 define a portion of the intake passage 34.

As shown in FIG. 3, an example of the throttle valve 39 is a butterfly valve. The throttle valve 39 is driven to move by an amount corresponding to an operation amount of an accelerator grip 7b attached to a right end portion of the handle bar 7a. The throttle valve 39 may be connected to the accelerator grip 7b via a throttle wire, or may be connected to a throttle motor that is driven in accordance with the operation of the accelerator grip 7b. As shown in FIG. 2, the throttle body 40 is disposed at a height between the main frame 4 and the cylinder head 25. The throttle body 40 is connected to the cylinder head 25 via an intake member 50 that defines a portion of the intake passage 34. The intake member 50 extends upwardly from the cylinder head 25 toward the throttle body 40.

As shown in FIG. 3, the straddled vehicle 1 includes a fuel supply device 43 that supplies fuel to the combustion chamber 28. The fuel supply device 43 includes the fuel tank 13 described above, a fuel injector 44 that injects the fuel sent from the fuel tank 13, a fuel pump 45 that sends the fuel inside the fuel tank 13 to the fuel injector 44, and a fuel piping 46 that guides the fuel from the fuel pump 45 to the fuel injector 44. The fuel injector 44 may inject the fuel toward the intake passage 34, or may inject the fuel toward the combustion chamber 28. FIG. 2 shows an example where the fuel injector 44 is configured to inject the fuel toward the intake passage 34. The fuel injector 44 is attached to the intake member 50.

As shown in FIG. 3, the straddled vehicle 1 includes an ECU (Electronic Control Unit) 47 that controls the engine 8. The ECU 47 is connected to a plurality of sensors including a throttle opening degree sensor 48 that detects a position of the throttle valve 39 and a crank sensor 49 that detects a rotational speed of the crank shaft 24. The throttle opening degree sensor 48 is attached to the intake flow rate control device 38 and the crank sensor 49 is attached to the engine 8. The ECU 47 controls the injection amount of the fuel from the fuel injector 44, the ignition timing of the spark plug 31 and so on based on detection values of these sensors.

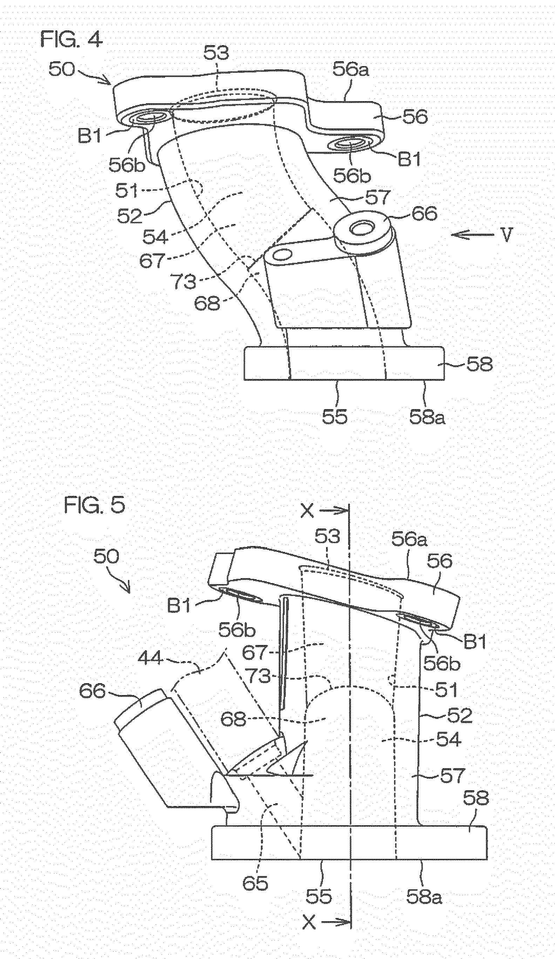

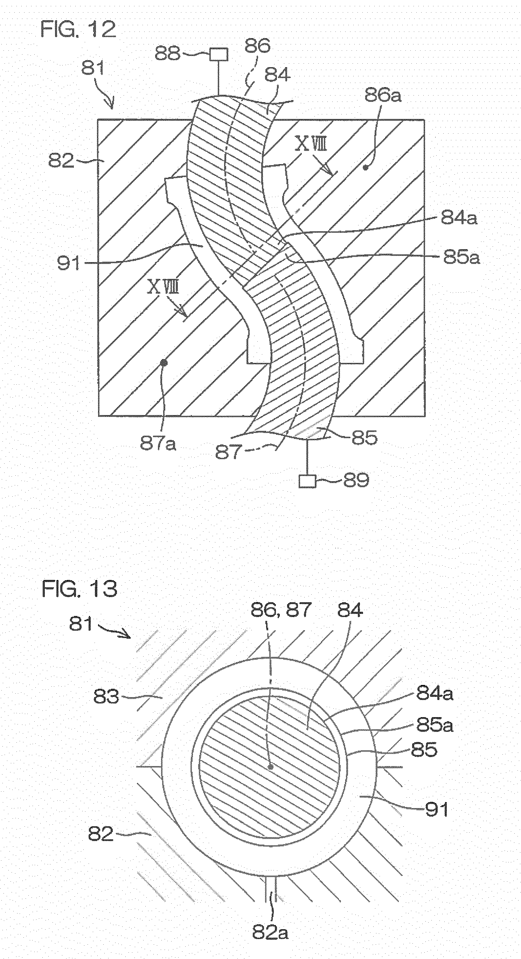

Next, a structure of the intake member and a method for manufacturing the intake member will be described in detail. First, description will be given of the structure of the intake member referring to FIG. 4 to FIG. 11, and then description will be given of the method for manufacturing the intake member referring to FIG. 12 to FIG. 15.

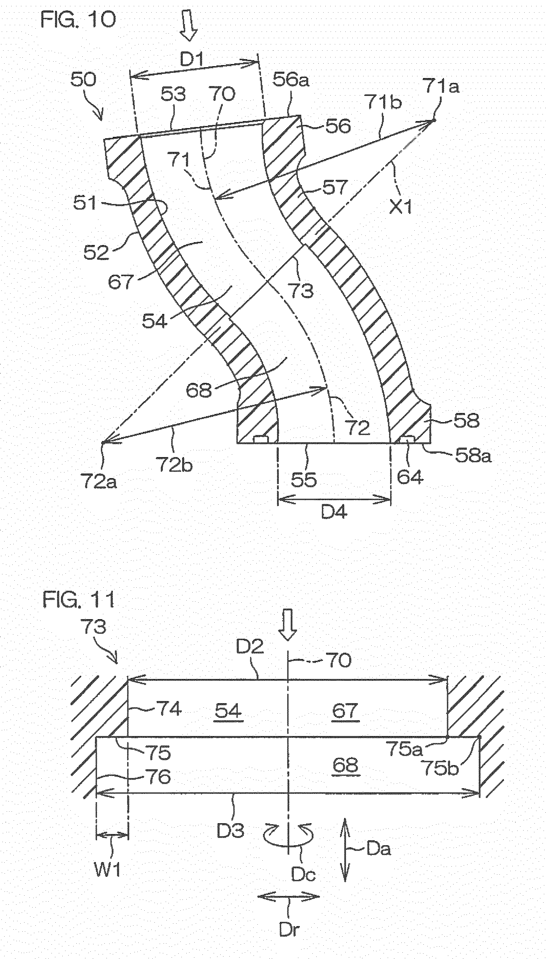

In the following description, an axial direction Da (refer to FIG. 11) means to a direction along a center line 70 of the intake member 50, a circumferential direction Dc means a direction around the center line 70 of the intake member 50, and a radial direction Dr means a direction perpendicular to the center line 70 of the intake member 50. As shown in FIG. 10, because the center line 70 of the intake member 50 is not a straight line, the axial direction Da changes according to a position on the center line 70. Similarly, the circumferential direction Dc and the radial direction Dr change according to a position on the center line 70.

As shown in FIG. 10, the intake member 50 is made of synthetic resin. An inner wall 51 of the intake member 50 defines a flow passage 54, which guides intake air from the intake flow rate control device 38 to the engine 8, by a tubular inner wall surface of the intake member 50. The flow passage 54 is a portion of the intake passage 34. An inlet 53 that corresponds to an upstream end of the flow passage 54 and an outlet 55 that corresponds to a downstream end of the flow passage 54 are open at an outer wall 52 of the intake member 50.

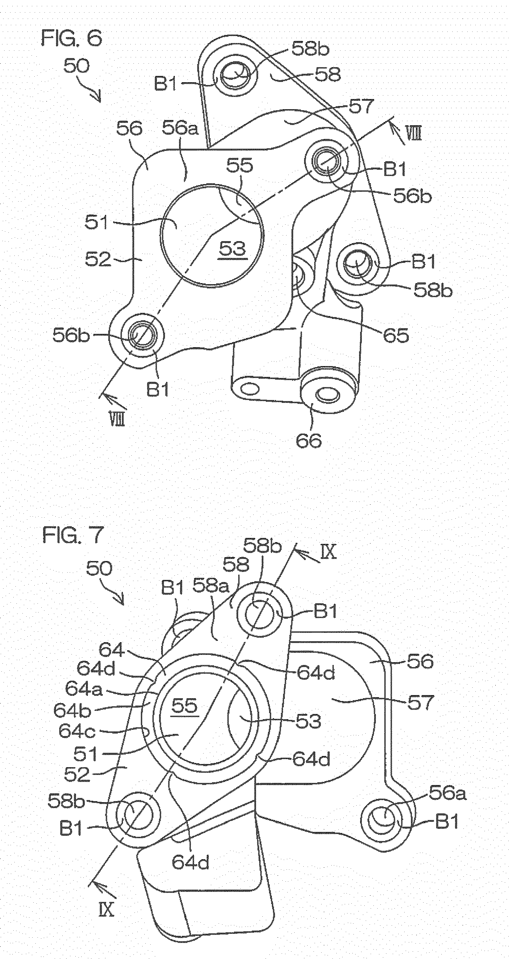

As shown in FIG. 10, the inlet 53 of the flow passage 54 is disposed higher than the outlet 55 of the flow passage 54. The intake air that has flowed into the flow passage 54 from the inlet 53 of the flow passage 54 is discharged out of the flow passage 54 from the outlet 55 of the flow passage 54. As shown in FIG. 6 and FIG. 7, each of the inlet 53 and the outlet 55 of the flow passage 54 has a circular shape. A diameter of the outlet 55 of the flow passage 54 is smaller than a diameter of the inlet 53 of the flow passage 54. Thus, an opening area of the outlet 55 of the flow passage 54 is smaller than an opening area of the inlet 53 of the flow passage 54.

As shown in FIG. 4 and FIG. 5, the intake member 50 includes an annular first flange portion 56 connected to the throttle body 40, an annular second flange portion 58 connected to the cylinder head 25, and a tubular portion 57 extending from the first flange portion 56 to the second flange portion 58. The first flange portion 56 and the second flange portion 58 are connected to each other via the tubular portion 57.

As shown in FIG. 4 and FIG. 5, the first flange portion 56 includes a flat first attached surface 56a, the second flange portion 58 includes a flat second attached surface 58a. The first attached surface 56a is inclined with respect to the second attached surface 58a. The inlet 53 of the flow passage 54 is open at the first attached surface 56a of the first flange portion 56, and the outlet 55 of the flow passage 54 is open at the second attached surface 58a of the second flange portion 58. As shown in FIG. 6, a portion of the outlet 55 can be seen when the inlet 53 is viewed from the side of the intake flow rate control device 38 in a direction perpendicular to the first attached surface 56a of the first flange portion 56.

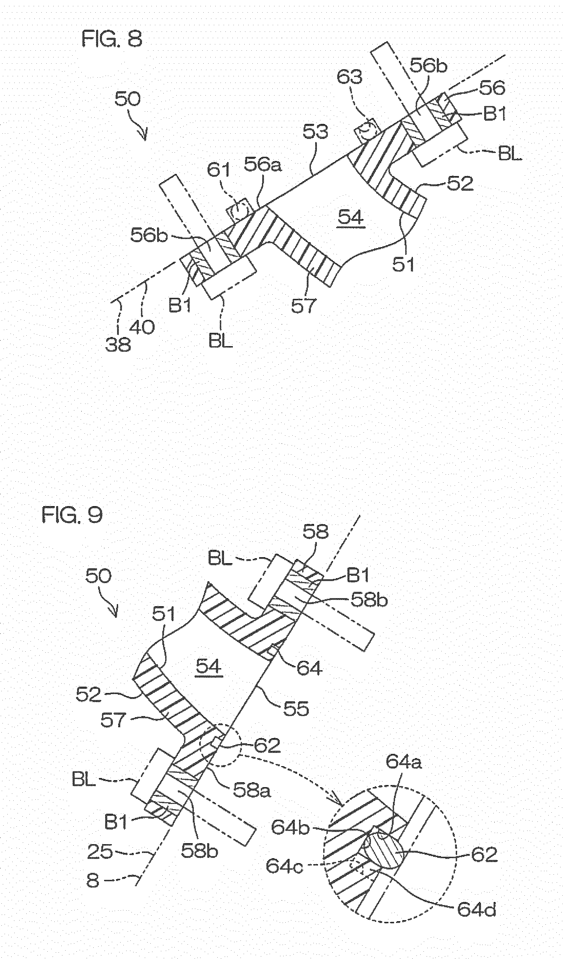

As shown in FIG. 8, the first flange portion 56 is attached to the throttle body 40 by a plurality of bolts BT. Metal bushings B1 in which the bolts BT are inserted are held in first bolt-inserted holes 56b that penetrate the first flange portion 56 in the thickness direction thereof. The first attached surface 56a of the first flange portion 56 is opposed to an end surface of the throttle body 40 in parallel. The first flange portion 56 is attached to the throttle body 40 by the plurality of bolts BT in a state where an annular first seal 61 is interposed between the first attached surface 56a of the first flange portion 56 and the end surface of the throttle body 40. As a result, a gap between the first flange portion 56 and the throttle body 40 is filled with the first seal 61.

As shown in FIG. 9, the second flange portion 58 is attached to the cylinder head 25 by the plurality of bolts BT. Metal bushings B1 in which the bolts BT are inserted are held in second bolt-inserted holes 58b that penetrate the second flange portion 58 in the thickness direction thereof. The second attached surface 58a of the second flange portion 58 is opposed to an end surface of the cylinder head 25 in parallel. The second flange portion 58 is attached to the cylinder head 25 by the plurality of bolts BT in a state where an annular second seal 62 is interposed between the second attached surface 58a of the second flange portion 58 and the end surface of the cylinder head 25. As a result, a gap between the second flange portion 58 and the cylinder head 25 is filled with the second seal 62.

Each of the first seal 61 and the second seal 62 is made of elastic material such as synthetic resin. As shown in FIG. 8, the first seal 61 is held in an annular first seal-holding groove 63 provided with the throttle body 40. As shown in FIG. 9, the second seal 62 is held in an annular second seal-holding groove 64 provided with the second attached surface 58a of the second flange portion 58. The first seal-holding groove 63 may be provided with the first attached surface 56a of the first flange portion 56. The second seal-holding groove 64 may be provided with the cylinder head 25.

As shown in FIG. 7, an inner surface of the second seal-holding groove 64 includes an annular inner circumference portion 64a surrounding the outlet 55 of the flow passage 54, an annular outer circumference portion 64c surrounding the inner circumference portion 64a, an annular bottom portion 64b by which the outer circumference portion 64c and the inner circumference portion 64a are connected together, and one or more the projecting portions 64d protruding inwardly with respect to the radial direction Dr from the outer circumference portion 64c. The projecting portions 64d may be provided with both of the inner circumference portion 64a and the outer circumference portion 64c, or may be provided with only the inner circumference portion 64a. The width (the length in the radial direction Dr) of the second seal-holding groove 64 decreases at positions corresponding to the projecting portions 64d. The second seal 62 is prevented from detaching from the second seal-holding groove 64 by the projecting portions 64d.

As shown in FIG. 5, the fuel injector 44 is inserted into an injector-attached hole 65 that is open at the outer wall 52 of the intake member 50. The injector-attached hole 65 is disposed at a height between the inlet 53 of the flow passage 54 and the outlet 55 of the flow passage 54. The injector-attached hole 65 extends from the outer wall 52 of the intake member 50 to the inner wall 51 of the intake member 50 toward the outlet 55 of the flow passage 54. The injector-attached hole 65 is open at the inner wall 51 (an inner wall of a second passage 68 described below) of the intake member 50. The injector-attached hole 65 is connected to the flow passage 54.

The fuel injector 44 includes fuel-jetting ports that jet fuel, a valve that opens and closes the fuel-jetting ports, an electric actuator that moves the valve between an open position and a closed position, and a housing that houses the valve and the electric actuator, though not shown. The housing of the fuel injector 44 is inserted into the injector-attached hole 65. The housing of the fuel injector 44 is fixed to the intake member 50 by a nut member 66 held by the intake member 50 and a bolt (not shown).

As shown in FIG. 10, the flow passage 54 of the intake member 50 includes a first passage 67 and a second passage 68 continuous with each other. Each of the first passage 67 and the second passage 68 has an arcuate shape. The first passage 67 is disposed upstream of the second passage 68 in the flow of intake air. An upstream end of the first passage 67 corresponds to the inlet 53 of the flow passage 54, a downstream end of the second passage 68 corresponds to the outlet 55 of the flow passage 54. A diameter of the first passage 67 decreases as a downstream end of the first passage 67 is approached. In contrast, a diameter of the second passage 68 decreases as an upstream end of the second passage 68 is approached. A diameter D1 (the diameter of the inlet 53) of the upstream end of the first passage 67 is greater than a diameter D4 (the diameter of the outlet 55) of the downstream end of the second passage 68. As shown in FIG. 11, a diameter D2 of the downstream end of the first passage 67 is smaller than a diameter D3 of the upstream end of the second passage 68.

As shown in FIG. 10, the center line 70 of the intake member 50 includes a first arcuate portion 71 and a second arcuate portion 72 continuous with each other. The first arcuate portion 71 is a center line of the first passage 67, and the second arcuate portion 72 is a center line of the second passage 68. Each of the first arcuate portion 71 and the second arcuate portion 72 is a circular arc with a central angle not more than 90 degrees and a fixed radius of curvature. A first curvature radius 71b of the first arcuate portion 71 is smaller than a second curvature radius 72b of the second arcuate portion 72. The first curvature radius 71b may be equal to the second curvature radius 72b, or may be greater than the second curvature radius 72b.

FIG. 10 shows a cross-section of the intake member 50 taken along the X-X line shown in FIG. 5. Thus, each of the first arcuate portion 71, the first curvature center 71a, the second arcuate portion 72, and the second curvature center 72a is on the same plane. The first curvature center 71a of the first arcuate portion 71 and the second curvature center 72a of the second arcuate portion 72 are disposed at respective positions different from each other. A line segment at both ends of which the first curvature center 71a and the second curvature center 72a are disposed respectively intersects the center line 70 of the intake member 50. Additionally, an intersection point of the line segment X1 and the center line 70 overlaps an intersection point of the first arcuate portion 71 and the second arcuate portion 72. The first curvature center 71a and the second curvature center 72a are disposed on mutually opposite sides with respect to the center line 70 of the intake member 50. The line segment X1 intersects the center line 70 of the intake member 50, so that a difference of heat-transfer distances is reduced in the same plane.

As shown in FIG. 10, the inner wall 51 of the intake member 50 defines an annular step 73 at a connecting position of the first passage 67 and the second passage 68. FIG. 11 is a schematic view showing an enlarged cross-section of the annular step 73. As shown in FIG. 11, the annular step 73 includes an annular upstream wall portion 74 extending in the axial direction Da of the intake member 50, an annular downstream wall portion 76 extending in the axial direction Da of the intake member 50 and disposed downstream of the upstream wall portion 74, and an annular connecting wall portion 75 by which the upstream wall portion 74 and the downstream wall portion 76 are connected to each other.

Each of the upstream wall portion 74, the connecting wall portion 75, and the downstream wall portion 76 surrounds the center line 70 of the intake member 50. The upstream wall portion 74 and the downstream wall portion 76 extend along the center line 70 of the intake member 50, and the connecting wall portion 75 extends in a direction that is inclined with respect to the center line 70 of the intake member 50. FIG. 11 shows an example where the connecting wall portion 75 is disposed on a plane that is perpendicular to the center line 70 of the intake member 50.

As shown in FIG. 11, the connecting wall portion 75 connects a first connecting end 75a of the upstream wall portion 74 and a second connecting end 75b of the downstream wall portion 76 with each other. The first connecting end 75a means an intersection line of the upstream wall portion 74 and the connecting wall portion 75, and the second connecting end 75b means an intersection line of the downstream wall portion 76 and the connecting wall portion 75. The first connecting end 75a corresponds to a downstream end of the first passage 67, and the second connecting end 75b corresponds to an upstream end of the second passage 68. The diameter D2 of the first connecting end 75a is smaller than the diameter D3 of the second connecting end 75b. A distance (a width W1 of the connecting wall portion 75) from the first connecting end 75a to the second connecting end 75b in the radial direction Dr of the intake member 50 is smaller than the difference of the diameter D1 of the upstream end of the first passage 67 and the diameter D2 of the downstream end of the first passage 67. When the first connecting end 75a and the second connecting end 75b are projected on a plane perpendicular to the center line 70 of the intake member 50, an area of a region surrounded by the first connecting end 75a is smaller than an area of a region surrounded by the second connecting end 75b.

As shown in FIG. 11, the connecting wall portion 75 extends outwardly with respect to the radial direction Dr of the intake member 50 from the first connecting end 75a toward the second connecting end 75b. The second connecting end 75b is disposed at more outward position than the first connecting end 75a with respect to the radial direction Dr of the intake member 50 at any position in the circumferential direction Dc of the intake member 50. That is, a distance from the center line 70 of the intake member 50 to the second connecting end 75b in the radial direction Dr is greater than a distance from the center line 70 of the intake member 50 to the first connecting end 75a in the radial direction Dr. The connecting wall portion 75 is directed downstream with respect to a flow direction (refer to a white arrow shown in FIG. 11) of intake air at any position in the circumferential direction Dc of the intake member 50.

As described above, the diameter of the first passage 67 decreases as the downstream end of the first passage 67 is approached. The width W1 of the connecting wall portion 75, i.e., a distance from the first connecting end 75a to the second connecting end 75b in the radial direction Dr of the intake member 50 is smaller than the difference of the diameter D1 of the upstream end of the first passage 67 and the diameter D2 of the downstream end of the first passage 67. The width W1 of the connecting wall portion 75 is 0.1 mm to 1.0 mm, for example. The width W1 of the connecting wall portion 75 may be constant regardless of the position in the circumferential direction Dc, or may be changed depending on the position in the circumferential direction Dc. In this way, the width W1 of the connecting wall portion 75 is small, so that the intake air flowing inside the flow passage 54 toward the outlet 55 of the intake member 50 is unlikely to be disturbed by the annular step 73. Thus, turbulence of air current flowing toward the outlet 55 of the intake member 50 is suppressed.

Next, the method for manufacturing the intake member 50 will be described.

In a manufacturing process for the intake member 50, an injection molding machine is used. FIG. 12 shows the mold device 81 to be installed to the injection molding machine. The mold device 81 includes a mold that shapes the outer wall 52 of the intake member 50 and a core that shapes the inner wall 51 of the intake member 50. As shown in FIG. 13, the mold includes a first mold 82 and a second mold 83 that define a cavity into which melted resin is injected. As shown in FIG. 12, the core includes an arc-shaped first rotary core 84 and an arc-shaped second rotary core 85 that are disposed in the cavity defined by the first mold 82 and the second mold 83.

As shown in FIG. 12, each of the first rotary core 84 and the second rotary core 85 has a columnar shape having an arc-shaped center line. An outer peripheral surface of the first rotary core 84 is tapered so as to decrease in outer diameter as a first end portion 84a, that corresponds to a tip portion, is approached. Similarly, an outer peripheral surface of the second rotary core 85 is tapered so as to decrease in outer diameter as a second end portion 85a, that corresponds to a tip portion, is approached. The first passage 67 of the intake member 50 is shaped by the outer peripheral surface of the first rotary core 84, and the second passage 68 of the intake member 50 is shaped by the outer peripheral surface of the second rotary core 85. An outer diameter of the first end portion 84a is smaller than an outer diameter of the second end portion 85a.

As shown in FIG. 12, when forming the intake member 50, a portion of the first rotary core 84 including the first end portion 84a and a portion of the second rotary core 85 including the second end portion 85a are disposed in the cavity defined by the first mold 82 and the second mold 83. At this time, the columnar first end portion 84a of the first rotary core 84 and the columnar second end portion 85a of the second rotary core 85 are butted against each other in such a manner that the arc-shaped center line 86 of the first rotary core 84 and the arc-shaped center line 87 of the second rotary core 85 are continuous with each other. The annular step 73 of the intake member 50 described above is shaped by the first end portion 84a and the second end portion 85a. At this time, in a case where the first end portion 84a and the second end portion 85a are eccentrically butted against each other, when an eccentricity amount is smaller than the difference of a radius of the second end portion 85a and a radius of the first end portion 84a, the annular step 73 directed downstream with respect to the flow direction of intake air is formed.

It is noted that in a case where the eccentricity amount is greater than the difference of the radius of the second end portion 85a and the radius of the first end portion 84a, the connecting wall portion is provided with a step directed upstream with respect to the flow direction of intake air. However, the step provided in this case is smaller than a step (a connecting wall portion) which is formed in a case where the eccentricity amount is the same and outer diameters of a first end portion and a second end portion are equal to each other.

As shown in FIG. 12, the first rotary core 84 is connected to a first actuator 88 such as a hydraulic cylinder at a position out of the first mold 82 and the second mold 83. The first actuator 88 moves the first rotary core 84 between a forming position (the position shown in FIG. 12) in which the first end portion 84a is disposed in the cavity and a retracted position in which the first end portion 84a is retracted from the cavity by rotating the first rotary core 84 around a curvature center 86a of the center line 86 of the first rotary core 84.

As shown in FIG. 12, the second rotary core 85 is connected to a second actuator 89 such as a hydraulic cylinder at a position out of the first mold 82 and the second mold 83. The second actuator 89 moves the second rotary core 85 between a forming position (the position shown in FIG. 12) in which the second end portion 85a is disposed in the cavity and a retracted position in which the second end portion 85a is retracted from the cavity by rotating the second rotary core 85 around a curvature center 87a of the center line 87 of the second rotary core 85.

When forming the intake member 50, as shown in FIG. 13, the first mold 82 and the second mold 83 are overlapped and closed. Additionally, as shown in FIG. 12, portions of the first rotary core 84 and the second rotary core 85 are disposed in the cavity defined by the first mold 82 and the second mold 83. Thus, a resin-injected space 91 that is to be filled with resin is defined at the inside of the first mold 82 and the second mold 83 around the first rotary core 84 and the second rotary core 85 in a state where the first end portion 84a of the first rotary core 84 and the second end portion 85a of the second rotary core 85 are butted against each other.

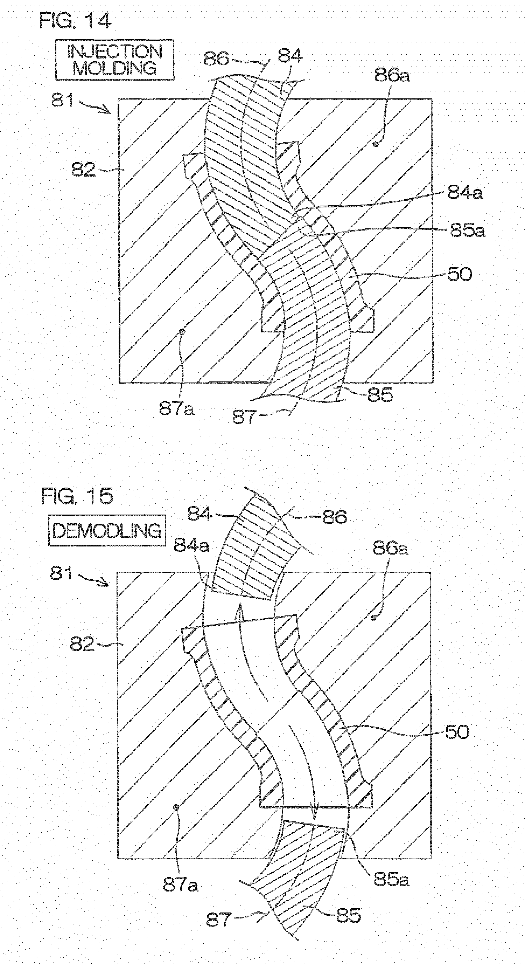

After the first mold 82, the second mold 83, the first rotary core 84, and the second rotary core 85 are disposed at the respective forming positions, melted resin is injected into the resin-injected space 91 from an injecting port 82a (refer to FIG. 13) provided with the first mold 82. Thus, as shown in FIG. 14, liquid resin spreads over the entire resin-injected space 91 and the resin-injected space 91 is filled with the resin. The first mold 82 and the second mold 83 are cooled by cooling water flowing inside the first mold 82 and the second mold 83. Thus, the liquid resin in the resin-injected space 91 is cooled by the first mold 82 and the second mold 83. As a result, the liquid resin in the resin-injected space 91 is solidified and the resin-made intake member 50 is formed.

After the liquid resin in the resin-injected space 91 is solidified, as shown in FIG. 15, the first rotary core 84 is rotated by the first actuator 88 from the forming position to the retracted position. Similarly, the second rotary core 85 is rotated by the second actuator 89 from the forming position to the retracted position. Thus, the first end portion 84a of the first rotary core 84a and the second end portion 85a of the second rotary core 85 are separated from each other and disposed outside the first mold 82 and the second mold 83. Thus, the first rotary core 84 and the second rotary core 85 are detached from the intake member 50 inside the first mold 82 and the second mold 83.

After the first rotary core 84 and the second rotary core 85 are detached from the intake member 50, the second mold 83 is moved to a retracted position, and the first mold 82 and the second mold 83 are opened. Thus, the intake member 50 is separated from the first mold 82 and stays in the second mold 83. Thereafter, the intake member 50 is detached manually or automatically from the second mold 83. If necessary, machining such as cutting and so on is performed to the intake member 50 after the intake member 50 is detached form the mold device 81. In this case, the intake member 50 detached from the mold device 81 corresponds to an intermediate member of the intake member 50.

As described above, in the first preferred embodiment, the annular step 73 is formed on the inner wall 51 of the intake member 50. The annular step 73 includes the upstream wall portion 74, the downstream wall portion 76, and the connecting wall portion 75. The connecting wall portion 75 connects the first connecting end 75a of the upstream wall portion 74 and the second connecting end 75b of the downstream wall portion 76 with each other. The second connecting end 75b of the downstream wall portion 76 is disposed at more outward position than the first connecting end 75a of the upstream wall portion 74 in the radial direction Dr of the intake member 50 at any position in the circumferential direction Dc of the intake member 50. The connecting wall portion 75 extends outward in the radial direction Dr of the intake member 50 from the first connecting end 75a toward the second connecting end 75b. Thus, the connecting wall portion 75 is directed downstream with respect to the flow direction of intake air. Therefore, even if the air-fuel mixture flows in reverse from the engine 8 to the intake member 50, the fuel contained in the air-fuel mixture is unlikely to be accumulated at the annular step 73 of the connecting wall portion 75. Therefore, the annular step 73 does not need to be removed by machining, because the fuel is unlikely to be accumulated at the annular step 73.

Consequently, the amount of the fuel accumulated in the intake member 50 is reduced, while the time and the effort required to manufacture the intake member 50 is suppressed or prevented from increasing.

In the first preferred embodiment, the opening area of the outlet 55 of the intake member 50 is smaller than the opening area of the inlet 53 of the intake member 50, so that the flow speed of intake air at the outlet 55 of the intake member 50 is greater than that at the inlet 53 of the intake member 50. Thus, turbulent flow is unlikely to occur at the outlet 55 of the intake member 50. Therefore, the flow of intake air at the outlet 55 of the intake member 50 is rectified, so that the flow of intake air flowing from the intake member 50 to the engine 8 is rectified. Additionally, the fuel in the vicinity of the outlet 55 of the intake member 50 is discharged immediately toward the downstream side, because the flow speed of intake air at the outlet 55 of the intake member 50 is high.

In the first preferred embodiment, the intake member 50 is made of resin that is lower in thermal conductivity than metal, so that the heat of the engine 8 is unlikely to be transferred to the intake flow rate control device 38 via the intake member 50. Additionally, the center line 70 of the intake member 50 includes the first arcuate portion 71 and the second arcuate portion 72, so that a heat-transfer distance of the intake member 50 is greater than that in a case where the entire center line 70 of the intake member 50 is a straight line. The heat-transfer distance means a length of a path along which the heat is transferred. In this way, because the thermal conductivity of the intake member 50 is low and the heat-transfer distance of the intake member 50 is long, an amount of the heat transferred from the engine 8 to the intake flow rate control device 38 is further reduced. Thus, increase in temperature of electronic component such as the throttle opening degree sensor 48 and so on is suppressed.

In the method for manufacturing the intake member 50 according to the first preferred embodiment, the inner wall 51 of the intake member 50 is formed by the first rotary core 84 and the second rotary core 85 in a state where the end portions of the first rotary core 84 and the second rotary core 85 are butted against each other. The first end portion 84a of the first rotary core 84 is smaller than the second end portion 85a of the second rotary core 85. If the first end portion 84a is eccentric with respect to the second end portion 85a, the connecting wall portion 75 absorbs the shift length. Thus, the connecting wall portion 75 is directed upstream in an entire circumference of the connecting wall portion 75. Therefore, the amount of the fuel accumulated in the intake member 50 is reduced, while the time and the effort required to manufacture the intake member 50 is suppressed or prevented from increasing.

### Second Preferred Embodiment

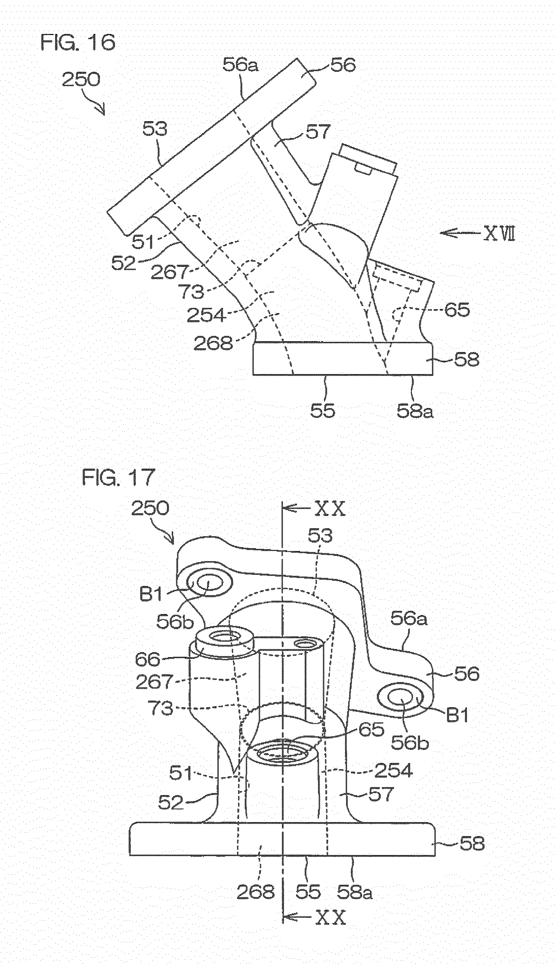

Next, a second preferred embodiment is described. In FIG. 16 to FIG. 25 described below, components equivalent to the components shown in FIG. 1 to FIG. 15 are designated by the same reference symbols as in FIG. 1, etc., and description thereof is omitted.

In the second preferred embodiment, an intake member according to the second preferred embodiment is provided in the straddled vehicle 1 instead of the intake member according to the first preferred embodiment.

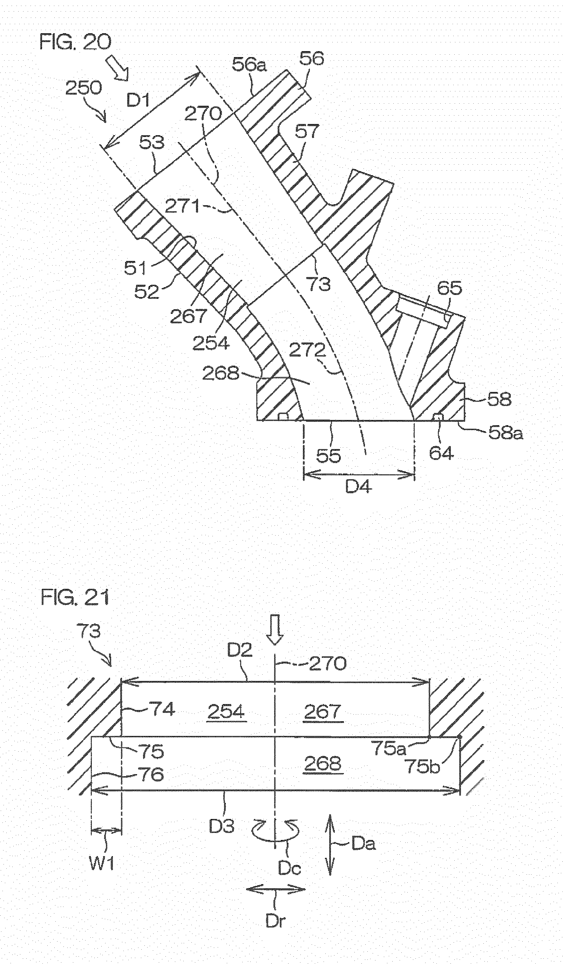

As shown in FIG. 20, the intake member 250 is made of synthetic resin. A flow passage 254 of the intake member 250 includes a first passage 267 and a second passage 268 continuous with each other. The first passage 267 has a linear shape. The second passage 268 has an arcuate shape. The first passage 267 is disposed upstream of the second passage 268 with respect to the flow direction of intake air. An upstream end of the first passage 267 corresponds to the inlet 53 of the flow passage 54, and a downstream end of the second passage 268 corresponds to the outlet 55 of the flow passage 54.

As shown in FIG. 20, a diameter of the first passage 267 decreases as a downstream end of the first passage 267 is approached. In contrast, a diameter of the second passage 268 decreases as an upstream end of the second passage 268 is approached. A diameter D1 (the diameter of the inlet 53) of the upstream end of the first passage 267 is greater than a diameter D4 (the diameter of the outlet 55) of the downstream end of the second passage 268. A diameter D2 (refer to FIG. 21) of the downstream end of the first passage 267 is smaller than a diameter D3 (refer to FIG. 21) of the upstream end of the second passage 268. Thus, the inner wall 51 of the intake member 250 defines the annular step 73 at a connecting position of the first passage 267 and the second passage 268.

As shown in FIG. 20, the center line 270 of the intake member 250 includes a first linear portion 271 and a second arcuate portion 272 continuous with each other. The first linear portion 271 is a center line of the first passage 267, and the second arcuate portion 272 is a center line of the second passage 268. The second arcuate portion 272 is a circular arc with a central angle not more than 90 degrees and a fixed radius of curvature. FIG. 20 shows a cross-section taken along the XX-XX line shown in FIG. 17. Thus, each of the first linear portion 271, the second arcuate portion 272, and the second curvature center 72a is on the same plane.

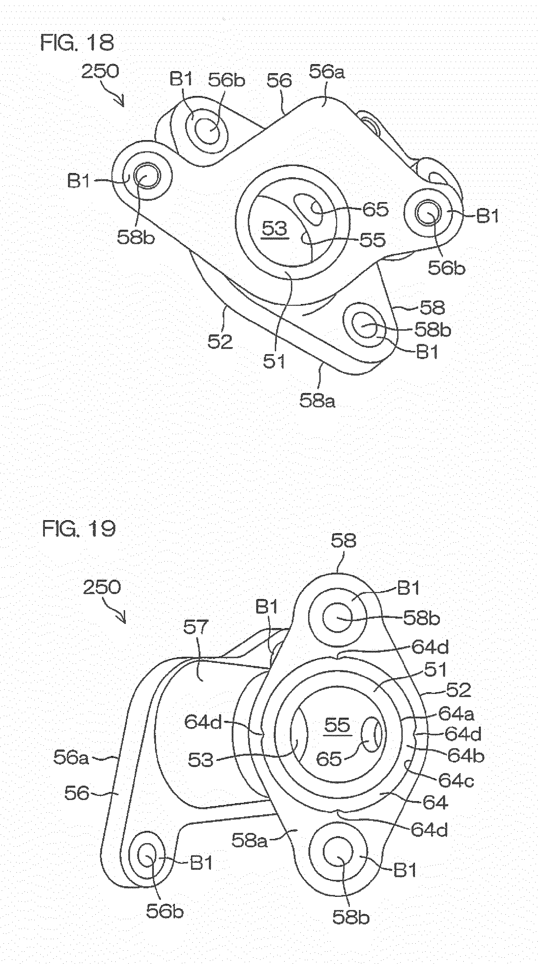

As shown in FIG. 18, a portion of the outlet 55 can be seen when the inlet 53 is viewed from the side of the intake flow rate control device 38 in a direction perpendicular to the first attached surface 56a of the first flange portion 56. Additionally, the injector-attached hole 65 can be seen when the inlet 53 is viewed in that way. As shown in FIG. 19, the injector-attached hole 65 also can be seen when the outlet 55 is viewed from the side of the engine 8 in a direction perpendicular to the second attached surface 58a of the second flange portion 58. As shown in FIG. 20, a center line of the injector-attached hole 65 is on the same plane as that of the first linear portion 271, the second arcuate portion 272, and the second curvature center 72a.

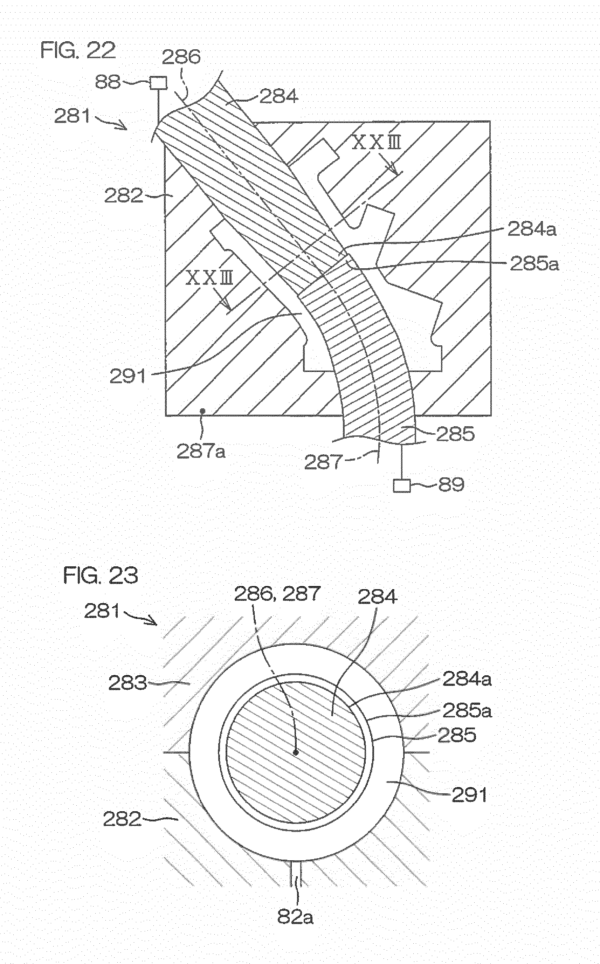

In a manufacturing process for the intake member 250, an injection molding machine is used. FIG. 22 to FIG. 25 shows the mold device 281 to be installed to the injection molding machine. The mold device 281 includes a mold that shapes the outer wall 52 of the intake member 250 and a core that shapes the inner wall 51 of the intake member 250. As shown in FIG. 23, the mold includes a first mold 282 and a second mold 283 that define a cavity into which melted resin is injected. As shown in FIG. 22, the core includes a first sliding core 284 and a second rotary core 285 that are disposed in the cavity defined by the first mold 282 and the second mold 283.

As shown in FIG. 22, the first sliding core 284 has a columnar shape having a linear center line 286. The second rotary core 285 has a columnar shape having an arc-shaped center line 287. An outer peripheral surface of the first sliding core 284 is tapered so as to decrease in outer diameter as a first end portion 284a, which corresponds to a tip portion, is approached. Similarly, an outer peripheral surface of the second rotary core 285 is tapered so as to decrease in outer diameter as a second end portion 285a, which corresponds to a tip portion, is approached. The first passage 267 of the intake member 250 is shaped by the outer peripheral surface of the first sliding core 284, and the second passage 268 of the intake member 250 is shaped by the outer peripheral surface of the second rotary core 285. An outer diameter of the first end portion 284a is smaller than an outer diameter of the second end portion 285a.

As shown in FIG. 22, when forming the intake member 250, a portion of the first sliding core 284 including the first end portion 284a and a portion of the second rotary core 285 including the second end portion 285a are disposed in the cavity defined by the first mold 282 and the second mold 283. At this time, the columnar first end portion 284a of the first sliding core 284 and the columnar second end portion 285a of the second rotary core 285 are butted against each other in such a manner that the linear center line 286 of the first sliding core 284 and the arc-shaped center line 287 of the second rotary core 285 are continuous with each other. The annular step 73 of the intake member 250 is shaped by the first end portion 284a and the second end portion 285a.

As shown in FIG. 22, the first sliding core 284 is connected to the first actuator 88 at a position out of the first mold 282 and the second mold 283. The first actuator 88 moves linearly the first sliding core 284 in an axial direction (a direction along the center line 286 of the first sliding core 284) of the first sliding core 284 between a forming position (the position shown in FIG. 22) in which the first end portion 284a is disposed in the cavity and a retracted position in which the first end portion 284a is retracted from the cavity.

As shown in FIG. 22, the second rotary core 285 is connected to the second actuator 89 at a position out of the first mold 282 and the second mold 283. The second actuator 89 moves the second rotary core 285 between a forming position (the position shown in FIG. 22) in which the second end portion 285a is disposed in the cavity and a retracted position in which the second end portion 285a is retracted from the cavity by rotating the second rotary core 285 around a curvature center 287a of the center line 287 of the second rotary core 285.

When forming the intake member 250, as shown in FIG. 23, the first mold 282 and the second mold 283 are overlapped and closed. Additionally, as shown in FIG. 22, portions of the first sliding core 284 and the second rotary core 285 are disposed in the cavity defined by the first mold 282 and the second mold 283. Thus, a resin-injected space 291 that is to be filled with resin is defined at the inside of the first mold 282 and the second mold 283 around the first sliding core 284 and the second rotary core 285 in a state where the first end portion 284a of the first sliding core 284 and the second end portion 285a of the second rotary core 285 are butted against each other.

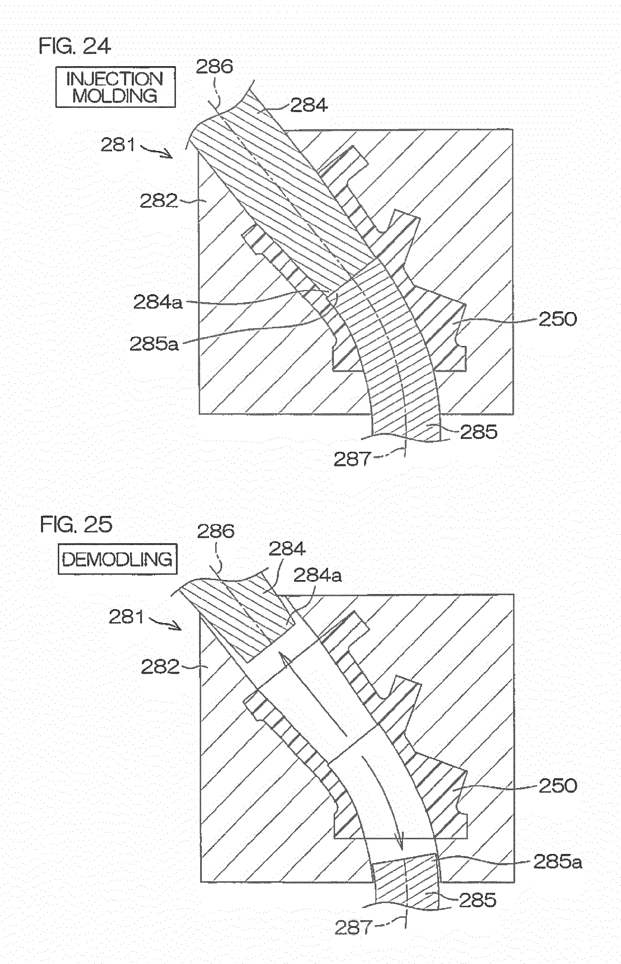

After the first mold 282, the second mold 283, the first sliding core 284, and the second rotary core 285 are disposed at the respective forming positions, melted resin is injected into the resin-injected space 291 from an injecting port 82a (refer to FIG. 23) provided with the first mold 282. Thus, as shown in FIG. 24, liquid resin spreads over the entire resin-injected space 291 and the resin-injected space 291 is filled with the resin. The first mold 282 and the second mold 283 are cooled by cooling water flowing inside the first mold 282 and the second mold 283. Thus, the liquid resin in the resin-injected space 291 is cooled by the first mold 282 and the second mold 283. As a result, the liquid resin in the resin-injected space 291 is solidified and the resin-made intake member 250 is formed.

After the liquid resin in the resin-injected space 291 is solidified, as shown in FIG. 25, the first sliding core 284 is moved by the first actuator 88 from the forming position to the retracted position in the axial direction Da thereof. Similarly, the second rotary core 285 is rotated by the second actuator 89 from the forming position to the retracted position. Thus, the first end portion 284a of the first sliding core 284 and the second end portion 285a of the second rotary core 285 are separated from each other and disposed outside the first mold 282 and the second mold 283. Thus, the first sliding core 284 and the second rotary core 285 are detached from the intake member 250 inside the first mold 282 and the second mold 283.

After the first sliding core 284 and the second rotary core 285 are detached from the intake member 250, the second mold 283 is moved to a retracted position, and the first mold 282 and the second mold 283 are opened. Thus, the intake member 250 is separated from the first mold 282 and stays in the second mold 283. Thereafter, the intake member 250 is detached manually or automatically form the second mold 283. If necessary, machining such as cutting and so on is performed to the intake member 250 after the intake member 250 is detached form the mold device 281. In this case, the intake member 250 detached from the mold device 281 corresponds to an intermediate member of the intake member 250.

### Other Preferred Embodiments

Although preferred embodiments have been described above, but various modifications of the embodiments are possible.

For example, in the preferred embodiments described above, a case where at least one of the first core and the second core is an arc-shaped rotary core is described. However, each of the first core and the second core may be a linear sliding core. That is, each of the first passage 67 and the second passage 68 may have a linear shape as long as the step is provided on the inner wall of the intake member.

In the preferred embodiments described above, a case where the first curvature center 71a of the first arcuate portion 71 and the second curvature center 72a of the second arcuate portion 72 are at different positions is described. However, the first curvature center 71a may be at the same position as the second curvature center 72a.

In the preferred embodiments described above, a case where the opening area of the inlet 53 of the intake member 50 is greater than the opening area of the outlet 55 of the intake member 50 is described. However, the opening area of the inlet 53 may be equal to the opening area of the outlet 55 of the intake member 50, or smaller than the opening area of the outlet 55 of the intake member 50.

In the preferred embodiments described above, a case where the width W1 of the connecting wall portion 75 (refer to FIG. 11) is smaller than the difference of an inner diameter D1 (refer to FIG. 10) of the intake member 50 at the inlet 53 and an inner diameter D2 (refer to FIG. 11) of the intake member 50 at the first connecting end 75a is described. However, the width W1 of the connecting wall portion 75 may be equal to the difference, or greater than the difference.

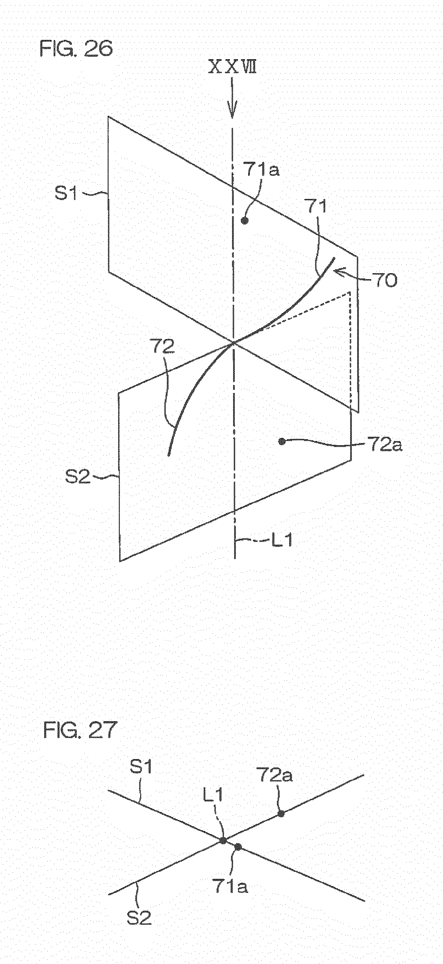

In the preferred embodiments described above, a case where each of the first arcuate portion 71, the first curvature center 71a, the second arcuate portion 72, and the second curvature center 72a is on the same plane is described. However, as shown in FIG. 26 and FIG. 27, the first arcuate portion 71 and the first curvature center 71a may be disposed on a plane S1 that is different from a plane S2 on which the second arcuate portion 72 and the second curvature center 72a are disposed. In this case, the first arcuate portion 71 and the second arcuate portion 72 are disposed on a line twisted around a straight line L1 passing through the intersection point of the first arcuate portion 71 and the second arcuate portion 72.

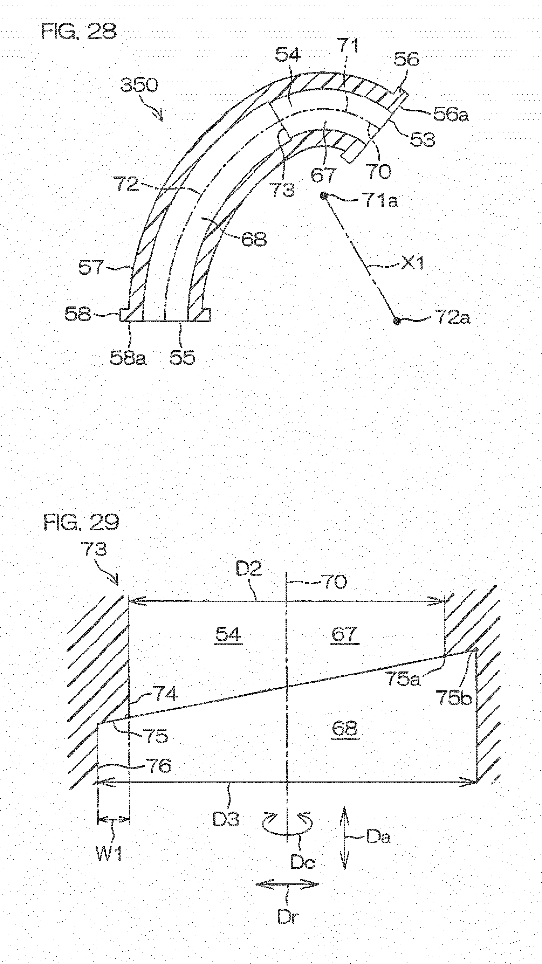

In the preferred embodiments described above, a case where the line segment X1 at both ends of which the first curvature center 71a and the second curvature center 72a are disposed respectively intersects the center line 70 of the intake member 50, and the intersection point of the line segment X1 and the center line 70 of the intake member 50 overlaps the intersection point of the first arcuate portion 71 and the second arcuate portion 72 is described. However, as with an intake member 350 shown in FIG. 28, the line segment X1 may be separated from the center line 70 of the intake member 50 so that the line segment X1 does not intersect the center line 70 of the intake member 50. The line segment X1 and the center line 70 overlap with each other so that the intersection point of the line segment X1 and the center line 70 does not overlap the intersection point of the first arcuate portion 71 and the second arcuate portion 72. As shown in FIG. 28, the first curvature center 71a and the second curvature center 72a are disposed on the same side with respect to the center line 70 of the intake member 350.

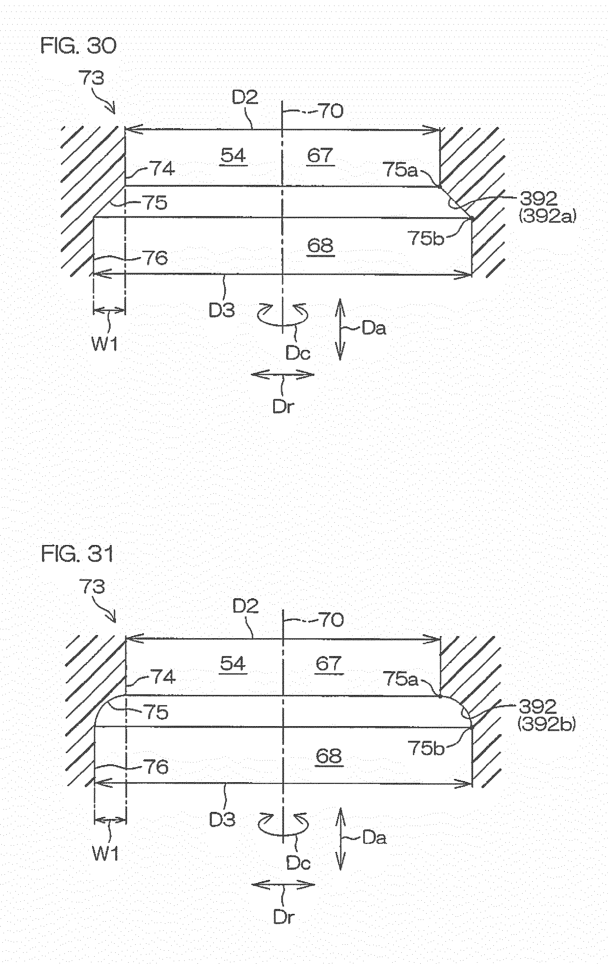

In the preferred embodiments described above, a case where the connecting wall portion 75 of the annular step 73 is disposed on the plane that is perpendicular to the center line 70 of the intake member 50 is described. However, as shown in FIG. 29, the connecting wall portion 75 may be disposed on a plane that is obliquely inclined with respect to the center line 70 of the intake member 50. Alternatively, as shown in FIG. 30 and FIG. 31, the connecting wall portion 75 may include an inclined portion 392 obliquely inclined with respect to the center line 70 of the intake member 50 so as to move away from the center line 70 of the intake member 50 from the upstream wall portion 74 toward the downstream wall portion 76.

As shown in FIG. 30 and FIG. 31, the inclined portion 392 connects the first connecting end 75a of the upstream wall portion 74 and the second connecting end 75b of the downstream wall portion 76 with each other. The inclined portion 392 may be a linear portion 392a obliquely inclined with respect to the center line 70 of the intake member 50 at a fixed inclination angle as shown in FIG. 30, or a concave arcuate portion 392b inclined so that an inclination angle of the arcuate portion 392b with respect to the center line 70 of the intake member 50 continuously changes as shown in FIG. 31. The inclined portion 392 described above can be formed by providing a corner portion having a shape that corresponds to the inclined portion 392 with the second end portion 85a of the second rotary core 85, for example.

In the preferred embodiments described above, a case where a portion of the outlet 55 of the intake member 50 can be seen when the inlet 53 of the intake member 50 is viewed from the side of the intake flow rate control device 38 is described. However, when the inlet 53 is viewed as described above, the entire outlet 55 may be seen or any portion of the outlet 55 may not be seen.

In the preferred embodiments described above, a case where two flange portions (the first flange portion 56 and the second flange portion 58) are provided with the intake member 50 is described. However, at least one of the flange portions may be omitted.

In the preferred embodiments described above, a case where the intake member 50 is attached to the throttle body 40 and the cylinder head 25 via other members such as the first seal 61, the second seal 62 and so on is described. However, the intake member 50 may be directly attached to the throttle body 40. Similarly, the intake member 50 may be directly attached to the cylinder head 25.

In the preferred embodiments described above, a case where each of the first seal 61 and the second seal 62 is an annular seal is described. However, at least one of the first seal 61 and the second seal 62 may have a plate-shaped configuration. That is, the first seal 61 and the second seal 62 are not limited to an O-ring, but may be a gasket.

The intake member 50 may be manufactured by a method other than the manufacturing method according to the preferred embodiments.

In the preferred embodiments described above, a case where the fuel supply device 43 includes the fuel injector 44 is described. However, as shown in FIG. 32, the fuel supply device 43 may include a carburetor 394 instead of the fuel injector 44. In this case, there is no need to provide the injector-attached hole 65 with the intake member 50.

In the preferred embodiments described above, a case where the engine 8 is a single-cylinder 4-stroke air - cooled engine is described. However, the engine 8 may be a water - cooled engine or a multi-cylinder engine. In a case where the engine 8 is a multi-cylinder engine, a plurality of the intake member 50 independent of each other may be provided with the straddled vehicle 1, or an integral member including a plurality of the intake member 50 may be provided with the straddled vehicle 1.

In the preferred embodiments described above, a case where the straddled vehicle 1 is an undertone type motorcycle is described However, the straddled vehicle 1 may be a scooter type motorcycle including the engine 8 that is swingable in the up-down direction with respect to the frame 2, or may be a sport-type motorcycle. The straddled vehicle 1 is not limited to a motorcycle, but may be a straddled vehicle including not less than 3 wheels, an all-terrain vehicle, or a snowmobile.

Two or more of any of the arrangements described above may be combined. Two or more of any of the steps described above may be combined.

## Claims

1. A straddled vehicle (1) comprising:
an engine (8);
an intake flow rate control device (38) that adjust a flow rate of intake air to be supplied to the engine (8);
an intake member (50, 250, 350) that includes an inner wall (51) defining a flow passage (54, 254) that guides the intake air from the intake flow rate control device (38) to the engine (8); wherein
the intake member (50, 250, 350) includes an outer wall (52) provided with an inlet (53) and an outlet (55), the inlet (53) configured to guide the intake air which has passed through the intake flow rate control device (38) to the flow passage (54, 254), the outlet (55) configured to discharge the intake air which has flowed into the inlet (53); and
wherein an opening area of the outlet (55) of the intake member (50, 250, 350) is smaller than an opening area of the inlet (53) of the intake member (50, 250, 350);
the straddle vehicle being **characterized in that**
the intake member (50, 250, 350) is an integral member made of resin,
an annular step (73) is formed on the inner wall (51) of the intake member (50, 250, 350),
the annular step (73) includes an upstream wall portion (74) that extends in an axial direction (Da) of the intake member (50, 250, 350), a downstream wall portion (76) that extends in the axial direction (Da) at a position downstream of the upstream wall portion (74) with respect to a flow direction of the intake air, and a connecting wall portion (75) that connects a first connecting end (75a) of the upstream wall portion (74) and a second connecting end (75b) of the downstream wall portion (76) with each other,
the second connecting end (75b) of the downstream wall portion (76) is disposed at a more outward position than the first connecting end (75a) of the upstream wall portion (74) in a radial direction (Dr) of the intake member (50, 250, 350), and
the connecting wall portion (75) extends outwardly in the radial direction (Dr) of the intake member (50, 250, 350) from the first connecting end (75a) toward the second connecting end (75b); and
an inner diameter of the intake member (50, 250, 350) decreases as a distance from the inlet (53) toward the upstream wall portion (74) of the annular step (73) increases, and decreases as a distance from the outlet (55) toward the downstream wall portion (76) of the annular step (73) increases;
wherein the connecting wall portion (75) of the annular step (73) includes an inclined portion (392) obliquely inclined with respect to a center line (70) of the intake member (50, 250, 350) so as to move away from the center line (70) of the intake member (50, 250, 350) from the upstream wall portion (74) toward the downstream wall portion (76),
wherein a center line (70) of the intake member (50) includes an first arcuate portion (71) and an second arcuate portion (72), and
a first curvature center (71a) of the first arcuate portion (71) and a second curvature center (72a) of the second arcuate portion (72) are at different positions.

2. A straddled vehicle (1) according to claim 1, wherein
a distance (W1) from the first connecting end (75a) to the second connecting end (75b) in the radial direction (Dr) of the intake member (50, 250, 350) is smaller than a difference of an inner diameter (D1) of the intake member (50, 250, 350) at the inlet (53) and an inner diameter (D2) of the intake member (50, 250, 350) at the first connecting end (75a).

3. A straddled vehicle (1) according to any one of claims 1 or 2, wherein a center line (270) of the intake member (250) includes an arcuate portion (272) and a linear portion (271).

## Patentansprüche

1. Spreizsitz-Fahrzeug (1), das umfasst:
einen Motor (8);
eine Einrichtung (38) zur Steuerung einer Ansaug-Strömungsgeschwindigkeit, die eine Strömungsgeschwindigkeit dem Motor (8) zuzuführender Ansaugluft reguliert;
ein Ansaug-Element (50, 250, 350), das eine Innenwand (51) enthält, die einen Strömungskanal (54, 254) bildet, der die Ansaugluft von der Einrichtung (38) zur Steuerung einer Ansaug-Strömungsgeschwindigkeit zu dem Motor (8) leitet; wobei
das Ansaug-Element (50, 250, 350) eine Außenwand (52) enthält, die mit einem Einlass (53) sowie einem Auslass (55) versehen ist, wobei der Einlass (53) so eingerichtet ist, dass er die Ansaugluft, die die Einrichtung (38) zur Steuerung einer Ansaug-Strömungsgeschwindigkeit durchlaufen hat, zu dem Strömungskanal (54, 254) leitet, und der Auslass (55) so eingerichtet ist, dass er die Ansaugluft ableitet, die in den Einlass (53) eingeströmt ist; und
wobei eine Öffnungsfläche des Auslasses (55) des Ansaug-Elementes (50, 250, 350) kleiner ist als eine Öffnungsfläche des Einlasses (53) des Ansaug-Elementes (50, 250, 350);
und das Spreizsitz-Fahrzeug **dadurch gekennzeichnet ist, dass**
das Ansaug-Element (50, 250, 350) ein integrales aus Kunststoff bestehendes Element ist,
ein ringförmiger Absatz (73) an der Innenwand (51) des Ansaug-Elementes (50, 250, 350) ausgebildet ist,
der ringförmige Absatz (73) einen Stromauf-Wandabschnitt (74), der sich in einer axialen Richtung (Da) des Ansaug-Elementes (50, 250, 350) erstreckt, einen Stromab-Wandabschnitt (76), der sich in der axialen Richtung (Da) an einer Position stromab von dem Stromauf-Wandabschnitt (74) in Bezug auf eine Strömungsrichtung der Ansaugluft erstreckt, sowie einen Verbindungs-Wandabschnitt (75) einschließt, der ein erstes Verbindungs-Ende (75a) des Stromauf-Wandabschnitts (74) und ein zweites Verbindungs-Ende (75b) des Stromab-Wandabschnitts (76) miteinander verbindet,
das zweite Verbindungs-Ende (75b) des Stromab-Wandabschnitts (76) an einer weiter außen liegenden Position in einer radialen Richtung (Dr) des Ansaug-Elementes (50, 250, 350) angeordnet ist als das erste Verbindungs-Ende (75a) des Stromauf-Wandabschnitts (74), und
der Verbindungs-Wandabschnitt (75) sich in der radialen Richtung (Dr) des Ansaug-Elementes (50, 250, 350) von dem ersten Verbindungs-Ende (75a) auf das zweite Verbindungs-Ende (75b) zu erstreckt; und
ein Innendurchmesser des Ansaug-Elementes (50, 250, 350) mit einem zunehmenden Abstand von dem Einlass (53) in Richtung des Stromauf-Wandabschnitts (74) des ringförmigen Absatzes (73) abnimmt und mit einem zunehmenden Abstand von dem Auslass (55) in Richtung des Stromab-Wandabschnitts (76) des ringförmigen Absatzes (73) abnimmt;
wobei der Verbindungs-Wandabschnitt (75) des ringförmigen Absatzes (73) einen geneigten Abschnitt (392) einschließt, der in Bezug auf eine Mittellinie (70) des Ansaug-Elementes (50, 250, 350) schräg geneigt ist und sich von dem Stromauf-Wandabschnitt in Richtung des Stromab-Wandabschnitts (76) von der Mittellinie (70) des Ansaug-Elementes (50, 250, 350) weg bewegt,
eine Mittellinie (70) des Ansaug-Elementes (50) einen ersten bogenförmigen Abschnitt (71) sowie einen zweiten bogenförmigen Abschnitt (72) enthält, und
ein erster Krümmungsmittelpunkt (71a) des ersten bogenförmigen Abschnitts (71) und ein zweiter Krümmungsmittelpunkt (72a) des zweiten bogenförmigen Abschnitts (72) sich an verschiedenen Positionen befinden.

2. Spreizsitz-Fahrzeug (1) nach Anspruch 1, wobei
ein Abstand (W1) von dem ersten Verbindungs-Ende (75a) zu dem zweiten Verbindungs-Ende (75b) in der radialen Richtung (Dr) des Ansaug-Elementes (50, 250, 350) kleiner ist als eine Differenz zwischen einem Innendurchmesser (D1) des Ansaug-Elementes (50, 250, 350) an dem Einlass (53) und einem Innendurchmesser (D2) des Ansaug-Elementes (50, 250, 350) an dem ersten Verbindungs-Ende (75a).

3. Spreizsitz-Fahrzeug (1) nach einem der Ansprüche 1 oder 2, wobei eine Mittellinie (270) des Ansaug-Elementes (250) einen bogenförmigen Abschnitt (272) und einen geraden Abschnitt (271) einschließt.

## Revendications

1. Véhicule à enfourcher (1) comprenant :
un moteur thermique (8),
un dispositif de commande de débit d'écoulement d'admission (38) qui ajuste le débit d'écoulement de l'air d'admission à fournir au moteur (8),
un élément d'admission (50, 250, 350) qui inclut une paroi interne (51) définissant un passage d'écoulement (54, 254) qui guide l'air d'admission depuis le dispositif de commande de débit d'écoulement d'admission (38) jusqu'au moteur (8), dans lequel
l'élément d'admission (50, 250, 350) inclut une paroi externe (52) dotée d'une lumière d'entrée (53) et d'une lumière de sortie (55), la lumière d'entrée (53) étant configurée pour guider vers le passage d'écoulement (54, 254) l'air d'admission qui a traversé le dispositif de commande de débit d'écoulement d'admission (38), la lumière de sortie (55) étant configurée pour évacuer l'air d'admission qui a circulé dans la lumière d'entrée (53), et
dans lequel la surface d'ouverture de la lumière de sortie (55) de l'élément d'admission (50, 250, 350) est plus petite que la surface d'ouverture de la lumière d'entrée (53) de l'élément d'admission (50, 250, 350),
le véhicule à enfourcher étant **caractérisé en ce que** :
l'élément d'admission (50, 250, 350) est un élément intégré constitué de résine,
une marche annulaire (73) est formée sur la paroi interne (51) de l'élément d'admission (50, 250, 350), la marche annulaire (73) inclut une partie de paroi amont (74) qui s'étend dans la direction axiale (Da) de l'élément d'admission (50, 250, 350), une partie de paroi aval (76) qui s'étend dans la direction axiale (Da) à une position située en aval de la partie de paroi amont (74) par rapport à la direction d'écoulement de l'air d'admission, ainsi qu'une partie de paroi de raccordement (75) qui relie l'une à l'autre une première extrémité de raccordement (75a) de la partie de paroi amont (74) et une seconde extrémité de raccordement (75b) de la partie de paroi aval (76),
la seconde extrémité de raccordement (75b) de la partie de paroi aval (76) est disposée au niveau d'une position plus vers l'extérieur que la première extrémité de raccordement (75a) de la partie de paroi amont (74) dans la direction radiale (Dr) de l'élément d'admission (50, 250, 350), et
la partie de paroi de raccordement (75) s'étend vers l'extérieur dans la direction radiale (Dr) de l'élément d'admission (50, 250, 350) depuis la première extrémité de raccordement (75a) jusqu'à la seconde extrémité de raccordement (75b), et
le diamètre interne de l'élément d'admission (50, 250, 350) diminue à mesure que la distance depuis la lumière d'entrée (53) jusqu'à la partie de paroi amont (74) de la marche annulaire (73) augmente, et il diminue à mesure que la distance depuis la lumière de sortie (55) jusqu'à la partie de paroi aval (76) de la marche annulaire (73) augmente,
dans lequel la partie de paroi de raccordement (75) de la marche annulaire (73) inclut une partie inclinée (392) obliquement par rapport à l'axe central (70) de l'élément d'admission (50, 250, 350) de sorte à s'écarter de l'axe central (70) de l'élément d'admission (50, 250, 350) depuis la partie de paroi amont (74) vers la partie de paroi aval (76),
dans lequel l'axe central (70) de l'élément d'admission (50) inclut une première partie en forme d'arc (71) et une seconde partie en forme d'arc (72), et
le premier centre de courbure (71a) de la première partie en forme d'arc (71) et le second centre de courbure (72a) de la seconde partie en forme d'arc (72) se trouvent à des positions différentes.

2. Véhicule à enfourcher (1) selon la revendication 1, dans lequel :
la distance (W1) depuis la première extrémité de raccordement (75a) jusqu'à la seconde extrémité de raccordement (75b) dans la direction radiale (Dr) de l'élément d'admission (50, 250, 350) est plus petit que la différence du diamètre interne (D1) de l'élément d'admission (50, 250, 350) au niveau de la lumière d'entrée (53) et du diamètre interne (D2) de l'élément d'admission (50, 250, 350) au niveau de la première extrémité de raccordement (75a) .

3. Selon l'une quelconque des revendications 1 ou 2, dans lequel l'axe central (270) de l'élément d'admission (250) inclut une partie en forme d'arc (272) et une partie linéaire (271).
